# FASCICULE DE BREVET EUROPEEN

(11) **EP 0 901 132 B1**
(45) Date de publication et mention de la délivrance du brevet: **27.11.2002**
(21) Numéro de dépôt: 98402083.4
(22) Date de dépôt: 20.08.1998
(51) Int. Cl.: G21C 9/06, G21C 13/10, G21C 19/28

(54) **Réacteur nucléaire à eau incorporant des compartiments spécifiques de stockage et de traitement de l'hydrogène**
Spezielle zur Speicherung beziehungsweise der Bearbeitung von Wasserstoff zugeordnete Fächer enthaltender Wasserkernreaktor
Water nuclear reactor incorporating specific compartments for either storage or treatment of hydrogen

(30) Priorité: 22.08.1997 FR 9710579
(43) Date de publication de la demande: 10.03.1999
(73) Titulaire: COMMISSARIAT A L'ENERGIE ATOMIQUE, 75015 Paris (FR)
(72) Inventeur: Marsault, Philippe, 13860 Peyrolles En Provence (FR)
(74) Mandataire: Dubois-Chabert, Guy

(56) Documents cités:
- WO-A-97/16832
- DE-A- 3 035 103
- DE-A- 19 546 309
- FR-A- 2 683 375
- PATENT ABSTRACTS OF JAPAN vol. 013, no. 191 (P-867), 9 mai 1989 & JP 01 016995 A (HITACHI LTD), 20 janvier 1989

## Description

### Domaine technique

L'invention concerne un réacteur nucléaire à eau, et notamment à eau pressurisée, comprenant une enceinte étanche de confinement, à l'intérieur de laquelle de l'hydrogène peut être produit, dans l'hypothèse d'un accident grave, soit par radiolyse de l'eau, soit par interaction à haute température de la vapeur d'eau sur les parties métalliques du réacteur, incluant les gaines des crayons combustibles.

### Etat de la technique

Dans un réacteur nucléaire à eau, on prend habituellement en compte le risque de déflagration ou de détonation, généralement appelé "risque hydrogène", dû à l'hydrogène susceptible d'être produit dans l'enceinte de confinement du réacteur, dans l'hypothèse d'un accident grave. Ce risque provient du fait que l'hydrogène, mélangé à l'oxygène dans des proportions suffisantes, peut entraîner une déflagration du mélange de gaz. Pour une concentration encore plus élevée en hydrogène, il y a possibilité de détonation, donc de formation d'une onde de choc pouvant avoir des conséquences graves pour l'intégrité de l'enceinte de confinement.

La prise en compte du risque hydrogène repose généralement sur le fait que les réactions de déflagration ou de détonation peuvent être inhibées par la présence en quantité suffisante d'un gaz inerte chimiquement avec l'hydrogène, appelé gaz "inertant". Il peut s'agir de la vapeur d'eau relâchée en grande quantité à la suite d'un accident ou d'un gaz (azote, argon, etc.) introduit préventivement pour supprimer le risque.

Une solution connue pour lutter contre le risque hydrogène consiste à faire en sorte que l'hydrogène soit situé en permanence dans un volume suffisamment grand pour se trouver dans des conditions hors déflagration ou détonation, en raison de sa trop faible concentration ou en raison de la trop forte proportion du gaz "inertant", lorsque l'hydrogène est uniformément mélangé à l'atmosphère environnante. Dans ce cas, l'enceinte de confinement du réacteur est formée de compartiments qui peuvent tous communiquer entre eux par des ouvertures de différentes tailles.

Lorsque le gaz "inertant" est de la vapeur d'eau, la prévention du risque hydrogène peut n'être que temporaire, du fait de la condensation naturelle de la vapeur d'eau sur les murs encore froids de l'enceinte, ou du fait de l'utilisation d'un circuit d'aspersion de l'atmosphère de l'enceinte. Dans ce dernier cas, la vapeur d'eau se condense sur les gouttes d'eau du circuit d'aspersion.

Par ailleurs, l'efficacité de cette solution suppose que l'hydrogène soit uniformément mélangé à l'atmosphère environnante. Elle ne permet donc pas de s'affranchir de risques liés à des concentrations locales différentes à l'intérieur de l'enceinte, de façon temporaire ou permanente.

Ainsi, une concentration locale plus élevée peut être atteinte, par exemple dans le cas où une tuyauterie primaire présente une cassure par laquelle s'échappe de l'hydrogène pur. Celui-ci se mélange plus ou moins à l'atmosphère en traversant différents compartiments avant d'atteindre le dôme de l'enceinte. Il y a donc possibilité de trouver une concentration variable dans le temps et selon le lieu, allant de l'hydrogène quasiment pur jusqu'à une concentration presque nulle. Ces différentes concentrations peuvent varier selon le débit de l'hydrogène s'échappant de la cassure et selon l'emplacement de celle-ci.

Des différences de concentration en hydrogène à caractère permanent peuvent aussi être dues à la stratification des gaz par différence de température ou de densité. Elles peuvent avoir lieu dans le dôme de l'enceinte et dans un ou plusieurs compartiments.

Il peut donc exister des risques de déflagration locale, voir même de détonation d'une partie du mélange, de façon limitée dans le temps.

Dans les réacteurs nucléaires existants, la prévention du risque de trop fortes concentrations, surtout locales, est envisagée en plaçant de manière appropriée dans l'enceinte de confinement des appareils permettant une recombinaison de l'hydrogène avec l'oxygène. Ces appareils sont appelés "igniteurs" lorsqu'ils entraînent une réaction très localisée de déflagration ou de détonation, et "recombineurs" lorsqu'ils produisent une recombinaison sans flamme de l'oxygène et de l'hydrogène.

Dans les réacteurs existants, ces appareils sont soit fixés en des emplacements définitifs à l'intérieur de l'enceinte de confinement, soit mobiles de façon à être connectés sur un circuit relié à l'enceinte, lorsque cela est nécessaire.

De façon générale, la démonstration de l'efficacité de l'ensemble des solutions préconisées actuellement pour lutter contre le risque hydrogène est difficile, car on doit prouver que la détonation est impossible en tout lieu et à tout instant dans l'enceinte.

### Exposé de l'invention

L'invention a précisément pour objet un réacteur nucléaire à eau, dont la conception originale permet de garantir l'intégrité de l'enceinte de confinement dans l'hypothèse d'un accident grave, grâce à la présence de compartiments spécifiques assurant séparément le stockage et le traitement de l'hydrogène produit lors d'un tel accident.

Conformément à l'invention, ce résultat est obtenu au moyen d'un réacteur nucléaire à eau, comprenant une enceinte de confinement présentant un dôme et divisée en plusieurs compartiments incluant au moins une zone primaire logeant le circuit primaire du réacteur et un compartiment supérieur en contact avec le dôme, caractérisé par le fait que les compartiments de l'enceinte de confinement incluent de plus :
- un compartiment de stockage d'hydrogène en conditions accidentelles, communiquant avec la zone primaire, en partie basse, par un dispositif d'introduction de gaz, ce compartiment de stockage d'hydrogène étant normalement rempli d'eau sous l'action de moyens de mise en dépression de la partie haute du compartiment de stockage d'hydrogène ;
- un compartiment de traitement d'hydrogène, logeant des moyens de traitement de l'hydrogène, ce compartiment communiquant avec la partie haute du compartiment de stockage d'hydrogène par un premier clapet anti-retour apte à s'ouvrir vers le compartiment de traitement d'hydrogène, au travers de moyens de limitation de débit, et communiquant directement avec le compartiment supérieur.

Dans un réacteur ainsi conçu, le compartiment de stockage d'hydrogène fait office de réserve d'eau dans les conditions normales de fonctionnement du réacteur.

Dans l'hypothèse d'un accident ayant entraîné la rupture du circuit primaire du réacteur, l'eau qui s'échappe de ce circuit sous forme de vapeur fait monter la pression dans la zone primaire. Lorsqu'un certain niveau de pression est atteint, la vapeur, mélangée aux gaz incondensables, entre dans le compartiment de stockage d'hydrogène en partie basse, en traversant le dispositif d'introduction de gaz et l'eau contenue dans ce compartiment. En traversant l'eau, la vapeur se condense, de telle sorte que l'atmosphère qui parvient dans la partie supérieure du compartiment de stockage d'hydrogène est composée de gaz incondensables. Sous l'effet de l'augmentation de pression dans ce compartiment, les gaz incondensables sont évacués vers le compartiment supérieur de l'enceinte de confinement, au travers du compartiment de traitement de l'hydrogène.

De préférence, le compartiment de stockage d'hydrogène communique aussi avec la zone primaire, en partie haute, par un deuxième clapet anti-retour apte à s'ouvrir vers la zone primaire.

Dans une forme de réalisation préférée de l'invention, l'enceinte de confinement comprend de plus un compartiment d'expansion dont une partie basse communique avec la partie basse du compartiment de stockage d'hydrogène au travers d'une ouverture et d'un troisième clapet anti-retour apte à s'ouvrir vers le compartiment d'expansion. Une partie haute du compartiment d'expansion communique par ailleurs, directement avec le compartiment supérieur de l'enceinte. Cette caractéristique permet aux gaz admis dans la partie haute du compartiment de stockage d'hydrogène de chasser une partie de l'eau contenue dans ce compartiment vers le compartiment d'expansion, ce qui évite tout accroissement excessif de la pression et facilite l'évacuation de la puissance résiduelle du réacteur.

Pour contribuer au refroidissement de l'eau, des premiers moyens d'échange de chaleur sont placés de préférence dans le compartiment d'expansion.

Dans ce cas, le réacteur comprend une première porte amovible, permettant d'obturer l'ouverture et le troisième clapet anti-retour, et une deuxième porte amovible conçue pour obturer le dispositif d'introduction de gaz, lors des opérations de maintenance du réacteur.

Dans la forme de réalisation préférée de l'invention, les moyens de limitation de débit limitent le débit massique du fluide admis dans le compartiment de traitement de l'hydrogène à une valeur correspondant à la capacité maximale de traitement des moyens de traitement de l'hydrogène logés dans ce compartiment.

Avantageusement, le compartiment de traitement d'hydrogène communique également avec le compartiment supérieur de l'enceinte par un quatrième clapet anti-retour, apte à s'ouvrir vers le compartiment de traitement d'hydrogène. Les moyens de traitement de l'hydrogène comprennent alors des moyens de recombinaison de l'hydrogène avec l'oxygène de l'air contenu dans le compartiment supérieur et admis dans le compartiment de traitement d'hydrogène par ce quatrième clapet anti-retour.

Dans la forme de réalisation préférée de l'invention, les moyens de mise en dépression de la partie haute du compartiment de stockage d'hydrogène comprennent au moins une pompe normalement active, débouchant dans le compartiment supérieur et reliée à la partie haute du compartiment de stockage d'hydrogène au travers d'une vanne normalement ouverte.

La zone primaire de l'enceinte est normalement séparée du compartiment supérieur par un bouchon étanche.

Le circuit primaire du réacteur comprend habituellement une cuve munie d'un couvercle et la zone primaire inclut un puits de cuve logeant la cuve du réacteur, ainsi qu'un compartiment de maintenance logeant le couvercle de la cuve et situé au-dessus du puits de cuve, sans communication directe avec celui-ci. Des moyens sont alors prévus pour transférer dans le compartiment de maintenance une fraction de l'eau contenue dans le compartiment de stockage d'hydrogène, lors des opérations de maintenance du réacteur.

Dans le cas d'un réacteur à eau pressurisée, le circuit primaire comprend aussi des composants primaires incluant des générateurs de vapeur, des pompés primaires, un pressuriseur et des tuyauteries primaires. La zone primaire inclut alors également au moins un compartiment de logement des composants primaires, avec lequel le compartiment de stockage d'hydrogène communique en partie haute et en partie basse. Le compartiment de logement des composants primaires communique aussi en partie haute avec le haut du compartiment de maintenance et en partie centrale avec le haut du puits de cuve.

Dans ce dernier cas, la zone primaire inclut également, de préférence, un compartiment de récupération du coeur fondu, habituellement appelé "corium", en cas d'accident grave, ce compartiment étant placé sous le puits de cuve, sans communication directe avec celui-ci. Le compartiment de récupération de corium loge des moyens récupérateurs de corium et communique en partie haute et en partie basse avec le bas du compartiment de logement des composants primaires.

Des deuxièmes moyens d'échange de chaleur sont alors avantageusement placés dans le compartiment de récupération de corium.

### Brève description des dessins

On décrira à présent, à titre d'exemple non limitatif, une forme de réalisation préférée de l'invention, en se référant aux dessins annexés, dans lesquels :
- la figure 1 est une vue en coupe qui représente schématiquement un réacteur nucléaire à eau pressurisée réalisé conformément à l'invention, dans son état de fonctionnement normal ;
- la figure 2 est une vue en coupe comparable à la figure 1, qui représente le réacteur dans l'état qu'il occupe pendant les opérations de maintenance ;
- la figure 3 est une vue en coupe comparable aux figures 1 et 2, qui représente le réacteur dans l'état qu'il occupe au début d'un relâchement d'hydrogène consécutif à un accident grave ;
- la figure 4 est une vue en coupe comparable à la figure 3, représentant le réacteur dans l'état qu'il occupe à un stade ultérieur de l'accident, lorsque l'eau atteint son niveau maximal dans l'enceinte de confinement ; et
- la figure 5 est une vue en coupe comparable aux figures 3 et 4, représentant le réacteur dans l'état qu'il occupe à un stade encore plus avancé de l'accident, lorsque la pression a baissé dans la zone primaire et que la partie inférieure du compartiment de récupération de corium est refroidie.

### Description détaillée d'une forme de réalisation préférentielle

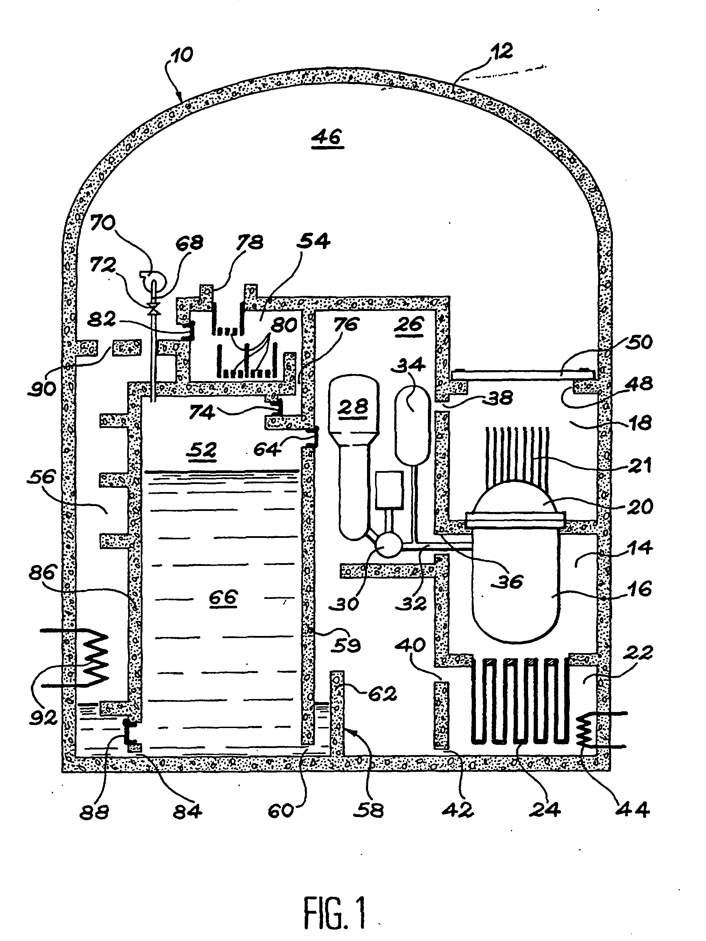

La figure 1 représente à titre d'exemple un réacteur nucléaire à eau pressurisée réalisé conformément à l'invention, dans l'état qu'il occupe en fonctionnement normal. Il est à noter qu'il s'agit d'une représentation schématique qui ne correspond pas à la géométrie exacte des différents composants, mais a simplement pour but d'en faire comprendre aisément les caractéristiques essentielles ainsi que le fonctionnement.

Le réacteur nucléaire à eau pressurisée illustré sur la figure 1 comprend une enceinte étanche de confinement 10, présentant un dôme 12 dans sa partie supérieure.

L'enceinte de confinement 10 est divisée intérieurement en un certain nombre de compartiments. Ces compartiments comprennent un puits de cuve 14, dans lequel est logée la cuve 16 du réacteur, un compartiment de maintenance 18, situé au-dessus du puits de cuve 14 et contenant le haut 20 de la cuve 16, son couvercle 20 et les mécanismes de commande 21, un compartiment 22 de récupération de corium, situé en dessous du puits de cuve 14 et contenant des moyens 24 récupérateur de corium, et un ou plusieurs compartiments 26 de logement des composants primaires du réacteur. Chacun des compartiments 26 permet de loger les composants primaires de l'une des boucles du circuit primaire du réacteur, c'est-à-dire un générateur de vapeur 28, une pompe primaire 30, des tuyauteries primaires 32 et, pour une seule des boucles, un pressuriseur 34.

L'ensemble des compartiments 14, 18, 22 et 26 forment une zone primaire, dans laquelle est logé le circuit primaire du réacteur.

Dans cette zone primaire, il n'existe pas de communication directe entre le puits de cuve 14 et le compartiment de maintenance 18, de même qu'entre le puits de cuve 14 et le compartiment 22 de récupération de corium. En revanche, le puits de cuve 14 communique en partie haute avec la partie centrale de chacun des compartiments 26 de logement des composants primaires. Cette communication s'effectue par une ouverture 36 permettant le passage des tuyauteries primaires 32.

Par ailleurs, la partie haute de chacun des compartiments 26 de logement des composants primaires communique avec le haut du compartiment de maintenance 18 par une ouverture 38.

En outre, le compartiment 22 de récupération de corium communique en partie haute et en partie basse avec le bas de chacun des compartiments 26 de logement des composants primaires, respectivement par des ouvertures 40 et 42.

A titre d'exemple nullement limitatif, les moyens 24 récupérateurs de corium peuvent être réalisés de la manière décrite dans le document FR-A- 2 683 375. Des moyens 44 d'échange de chaleur sont placés dans le compartiment 22 de récupération de corium, afin d'accélérer l'évacuation de la chaleur vers l'extérieur de l'enceinte de confinement 10, en cas d'accident.

Dans sa partie supérieure délimitée vers le haut par le dôme 12, l'enceinte de confinement 10 comporte également un compartiment supérieur 46, qui ne communique directement avec aucun des compartiments de la zone primaire lorsque le réacteur est en fonctionnement. Ainsi, une ouverture 48, formée dans la cloison horizontale séparant le compartiment supérieur 46 du compartiment de maintenance 18, est normalement obturée de façon étanche par un bouchon amovible 50.

Comme on le verra ultérieurement, ce bouchon 50 n'est enlevé que pendant les opérations de maintenance du réacteur.

Conformément à l'invention, les différents compartiments formés à l'intérieur de l'enceinte de confinement 10 du réacteur comprennent de plus un compartiment 52 de stockage d'hydrogène, un compartiment 54 de traitement d'hydrogène et, de préférence, un compartiment d'expansion 56.

Le compartiment 52 de stockage d'hydrogène communique en partie basse avec la zone primaire du réacteur par un dispositif 58 d'introduction de gaz. Plus précisément, ce dispositif 58 d'introduction de gaz relie la partie basse de chacun des compartiments 26 de logement des composants primaires au compartiment 52 de stockage d'hydrogène.

Dans la pratique, le dispositif 58 d'introduction de gaz comprend une ouverture 60 formée dans le bas du mur 59 séparant les compartiments 26 et 52, et un muret 62 entourant jusqu'à une certaine hauteur la partie basse du mur de séparation 59, dans laquelle est formée l'ouverture 60.

La partie haute du compartiment 52 de stockage d'hydrogène communique également avec la zone primaire par un clapet anti-retour 64, normalement fermé et apte à s'ouvrir vers chacun des compartiments 26 de logement de composants primaires lorsque la différence de pression entre les compartiments 52 et 26 dépasse un seuil prédéterminé.

Le compartiment 52 de stockage d'hydrogène est normalement rempli d'eau 66 jusqu'à un niveau légèrement inférieur à celui du clapet anti-retour 64. Le maintien de l'eau 66 à ce niveau dans le compartiment 52 de stockage d'hydrogène est assuré par des moyens de mise en dépression de la partie haute de ce compartiment. Dans la forme de réalisation illustrée schématiquement sur la figure 1, ces moyens de mise en dépression comprennent une canalisation 68 reliant la partie supérieure du compartiment 52 de stockage d'hydrogène au compartiment supérieur 46. Une pompe 70 et une vanne 72 sont placées dans la canalisation 68. Lorsque le réacteur fonctionne normalement, la vanne 72 est ouverte et la pompe 70 est en fonctionnement. Par conséquent, l'atmosphère contenue au-dessus de l'eau 66 dans le compartiment 52 de stockage d'hydrogène est aspirée, pour être refoulée dans le compartiment supérieur 46.

Le compartiment 52 de stockage d'hydrogène peut avoir une étanchéité renforcée, par exemple par une peau en acier inoxydable (non représentée). Il ne contient pas d'oxygène, pour supprimer tout risque d'explosion. En effet, comme on le verra ultérieurement, il est prévu pour recevoir de l'hydrogène lors d'un accident grave.

Le compartiment 54 de traitement d'hydrogène est placé directement au-dessus du compartiment 52 de stockage d'hydrogène et, plus précisément, entre ce dernier compartiment et le compartiment supérieur 46. Le compartiment 54 de traitement d'hydrogène communique avec la partie haute du compartiment 52 de stockage d'hydrogène par un clapet anti-retour 74 et des moyens 76 de limitation de débit, placés en série. Plus précisément, le clapet anti-retour 74, normalement fermé, s'ouvre automatiquement vers le compartiment 54 de traitement d'hydrogène lorsque la différence de pression entre les compartiments 52 et 54 dépasse un seuil prédéterminé.

Les moyens 76 de limitation de débit sont constitués par un passage de section réduite ou comportant un matériau poreux perméable, qui limite le débit massique du fluide admis dans le compartiment 54 à une valeur correspondant à la capacité maximale de traitement de moyens 80 de traitement de l'hydrogène, placés dans ce compartiment 54.

La cloison qui sépare le compartiment 54 de traitement d'hydrogène du compartiment supérieur 46 présente une ouverture 78 par laquelle ces deux compartiments communiquent directement entre eux.

Les moyens 80 de traitement de l'hydrogène peuvent être constitués par tout appareil, par exemple de type "igniteur" ou "recombineur", permettant une recombinaison de l'hydrogène avec l'oxygène de l'air. Ces moyens 80 de traitement de l'hydrogène peuvent être placés à l'intérieur du compartiment 54 et dans l'ouverture 78 par laquelle ce compartiment communique avec le compartiment supérieur 46, comme on l'a illustré schématiquement sur la figure 1.

Pour permettre le fonctionnement des moyens 80 de traitement de l'hydrogène, le compartiment 54 de traitement d'hydrogène communique avec le compartiment supérieur 46 par un autre passage, dans lequel est placé un clapet anti-retour 82. Ce clapet anti-retour, normalement fermé, est apte à s'ouvrir vers le compartiment 54 lorsque la différence de pression entre les compartiments 46 et 54 dépasse un certain seuil. Le clapet 82 assure ainsi l'alimentation en oxygène des moyens 80 de traitement de l'hydrogène.

Le compartiment 52 de stockage d'hydrogène communique également avec le compartiment d'expansion 56 par une ouverture 84 formée dans le bas du mur 86 séparant ces deux compartiments. A proximité de l'ouverture 84, le mur 86 est également traversé par une deuxième ouverture, normalement obturée par un clapet anti-retour 88. Ce clapet anti-retour 88, normalement fermé, s'ouvre automatiquement vers le compartiment d'expansion 56, lorsque la différence de pression entre les compartiments 52 et 56 dépasse un certain seuil.

Dans sa partie haute, le compartiment d'expansion 56 communique directement avec le compartiment supérieur 46 par des ouvertures 90.

Des moyens 92 d'échange de chaleur sont placés dans le bas du compartiment d'expansion 56, pour permettre l'évacuation de la chaleur à l'extérieur de l'enceinte de confinement 10, en conditions accidentelles.

Des moyens (non représenté) sont prévus pour transférer dans le compartiment de maintenance 18 une fraction de l'eau 66 contenue dans le compartiment 52 de stockage d'hydrogène, pendant les opérations de maintenance du réacteur. Ces moyens peuvent notamment comprendre une canalisation reliant les fonds de ces compartiments, ainsi qu'une pompe placée dans cette canalisation.

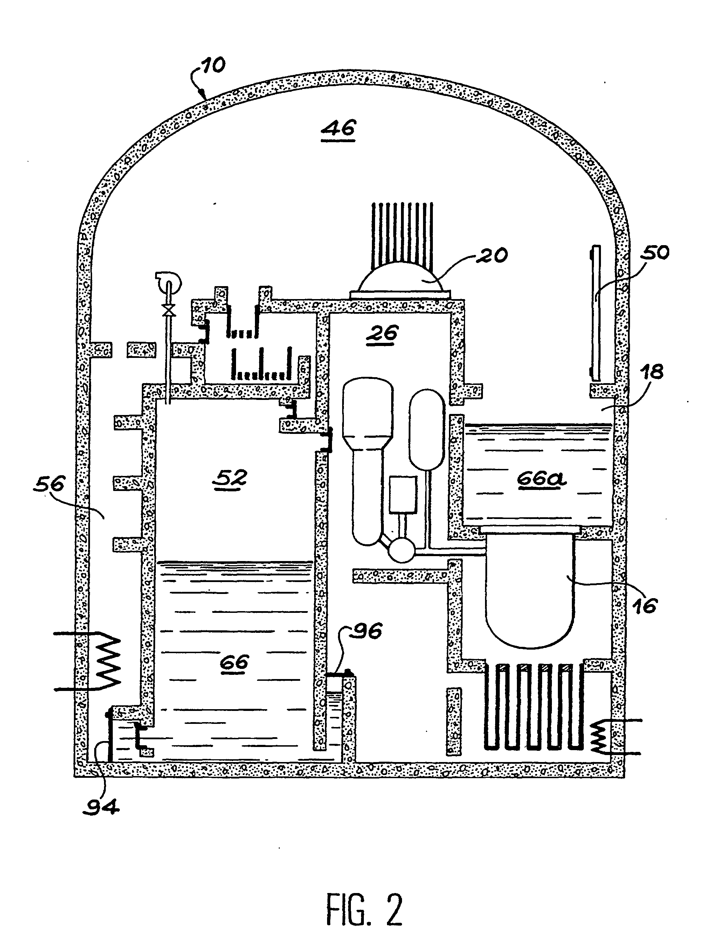

Comme l'illustre la figure 2, deux portes amovibles 94 et 96 sont prévues pour obturer, d'une part l'ouverture 84 et le clapet anti-retour 88 et, d'autre part le dispositif 58 d'introduction de gaz pendant les opérations de maintenance.

Lorsque le réacteur est en fonctionnement normal, il occupe l'état illustré sur la figure 1. Dans cet état, le fonctionnement de la pompe 70 et l'ouverture de la vanne 72 permettent de maintenir dans le haut du compartiment 52 de stockage d'hydrogène une dépression suffisante pour que le niveau de Peau 66 dans ce compartiment reste proche de celui du clapet anti-retour 64. Les différences de pression qui existent entre les différents compartiments délimités à l'intérieur de l'enceinte de confinement 10 sont telles que les différents clapets anti-retour 64, 74, 82 et 88 sont tous fermés.

Lorsque des opérations de maintenance sont envisagées, le réacteur est stoppé et les installations sont amenées dans l'état illustré schématiquement sur la figure 2. Ces opérations de maintenance peuvent notamment concerner le rechargement du combustible du réacteur, ou toute autre opération nécessitant une ouverture de la cuve 16.

Dans un premier temps, les communications entre le compartiment 52 de stockage d'hydrogène et les compartiments 26 et 56 sont fermées par la mise en place des portes 94 et 96. La fermeture de ces communications permet au personnel d'opérer en toute sécurité dans les compartiments accessibles lors des opérations de maintenance.

Une fraction 66a de l'eau 66 contenue dans le compartiment 52 de stockage d'hydrogène est ensuite transférée dans le compartiment de maintenance 18 par les moyens de transfert (non représentés) prévus à cet effet.

Le bouchon étanche 50 est ensuite ôté par l'ouverture 48, de telle sorte que les opérations de manutention classiques telles que l'enlèvement du couvercle 20 de la cuve ainsi que le rechargement du combustible peuvent être effectuées.

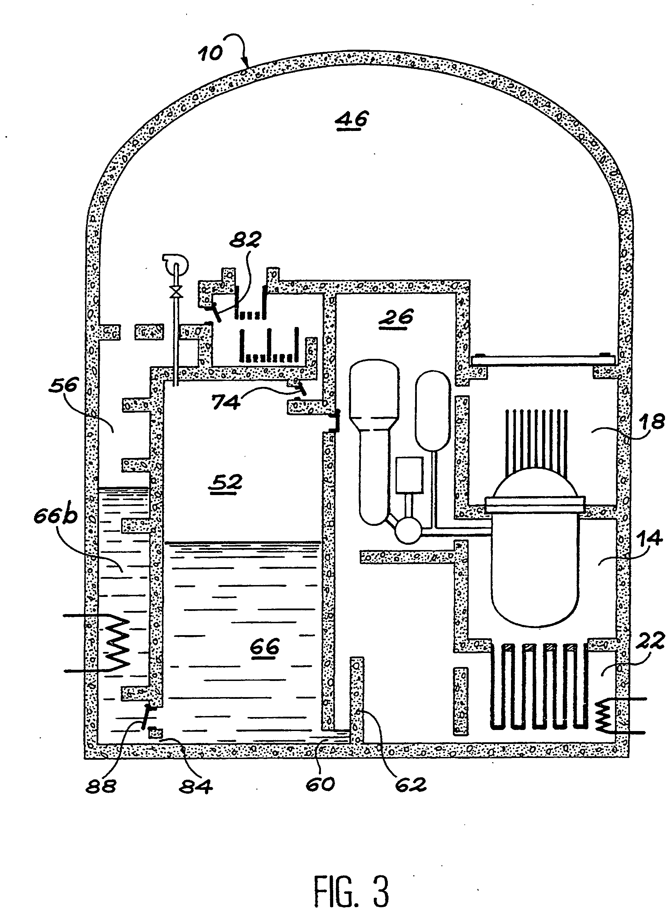

On décrira à présent, en se référant successivement aux figures 3 à 5, les différentes étapes consécutives à un accident ayant entraîné la rupture du circuit primaire du réacteur.

La figure 3 représente l'état du réacteur au début de l'accident. L'eau du circuit primaire s'échappe par une brèche. Il est à noter que l'emplacement de cette brèche est sans importance puisque tout le circuit primaire est confiné initialement dans les compartiments 14, 18, 22 et 26. La vapeur d'eau qui s'échappe du circuit primaire remplit progressivement ces compartiments. La pression monte dans la zone primaire et repousse l'eau située entre le muret 62 et l'ouverture 60. L'atmosphère de la zone primaire peut donc s'échapper dans le compartiment 52 de stockage d'hydrogène, au travers de l'eau 66 contenu dans ce dernier.

En traversant l'eau 66, la vapeur se condense, de telle sorte que l'atmosphère contenue dans la partie supérieure du compartiment 52 de stockage d'hydrogène est composée de gaz incondensables provenant de la composition initiale de l'atmosphère dans le compartiment 26 de logement des composants primaires.

La pression s'élève progressivement dans le haut du compartiment 52 de stockage d'hydrogène. Par conséquent, une fraction 66b de l'eau 66 contenue initialement dans le compartiment 52 est évacuée vers le compartiment d'expansion 56 au travers de l'ouverture 84 et du clapet 88. L'ouverture de ce dernier permet d'assurer un transfert important des masses d'eau entre les deux compartiments.

L'augmentation de pression dans la partie supérieure du compartiment 52 de stockage d'hydrogène a également pour conséquence l'ouverture des clapets 74 et 82 et le transfert des gaz qu'elle contient dans le compartiment 54 de traitement d'hydrogène. Ce transfert s'effectue au travers des moyens 76 de limitation de débit, c'est-à-dire à un débit massique dont la valeur est limitée à un niveau correspondant à la capacité maximale de traitement des moyens 80 de traitement de l'hydrogène placés dans le compartiment 54.

Lorsque les gaz incondensables ainsi transférés dans le compartiment 54 de traitement d'hydrogène comportent de l'hydrogène, celui-ci est traité par les moyens 80 de traitement de l'hydrogène. Ce traitement est permis par l'ouverture du clapet 82, consécutive à une dépression dans le compartiment 54, provoquée par la recombinaison de l'hydrogène. Cette situation est illustrée sur la figure 3.

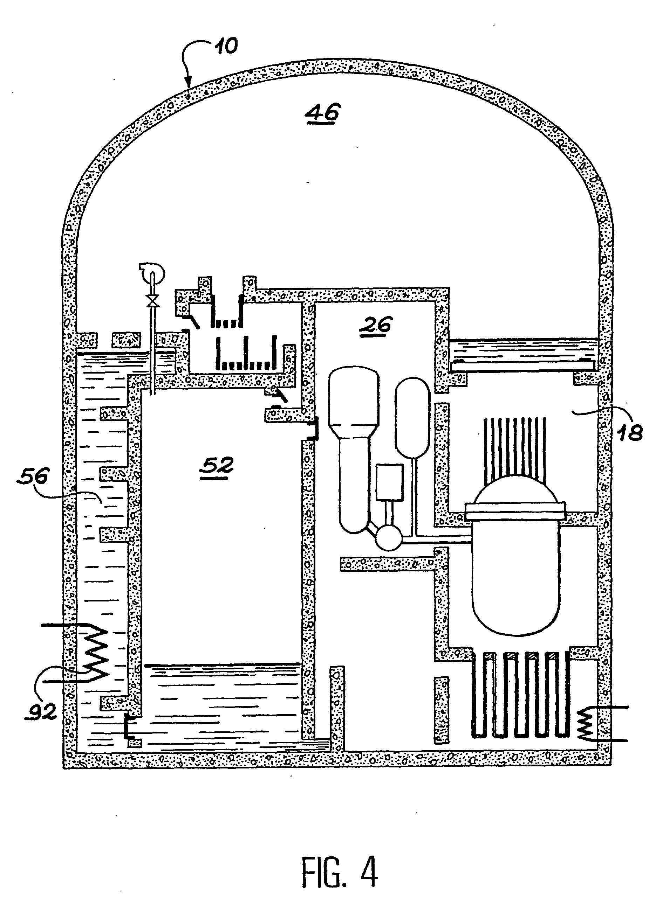

La figure 4 montre l'état du réacteur lorsque l'eau atteint son niveau maximal dans le compartiment d'expansion 56. L'eau s'épanche sur le plancher du compartiment supérieur 46 et constitue une source froide au-dessus et/ou autour des compartiments 18, 52 et 26. Les moyens d'échange de chaleur 92 peuvent alors être activés pour extraire la chaleur de l'enceinte de confinement 10.

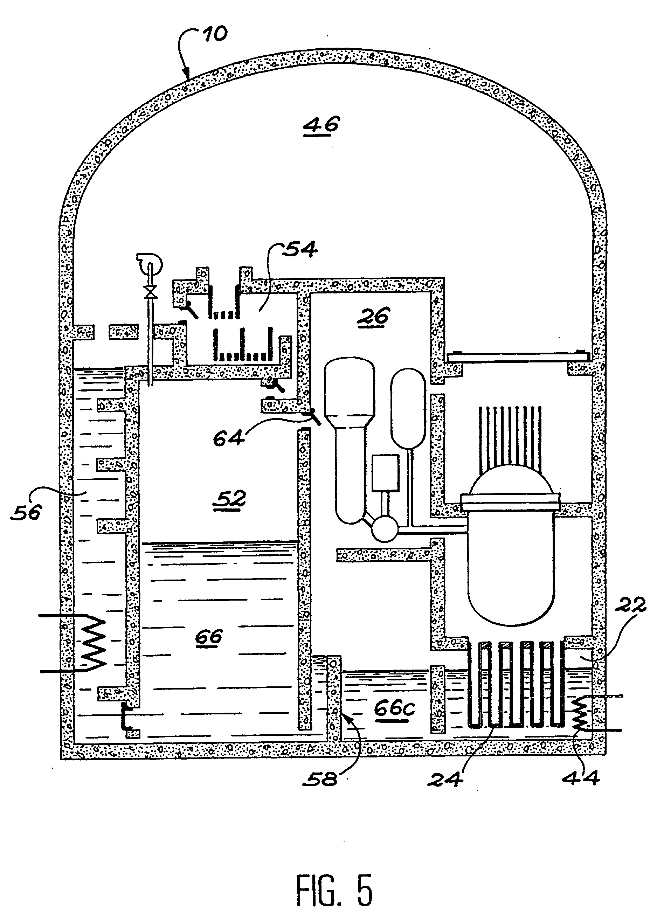

La figure 5 illustre la fin de la séquence de libération de l'hydrogène par le circuit primaire, alors que les niveaux d'eau n'ont pas retrouvé leurs valeurs définitives d'équilibre.

La pression diminue dans le haut du compartiment 52 de stockage d'hydrogène, à la suite du traitement continu de recombinaison d'hydrogène dans le compartiment 54 de traitement d'hydrogène. Par ailleurs, la pression dans le compartiment 26 de logement des composants primaires baisse, du fait de la condensation de la vapeur sur les murs. Il se produit donc un retour d'eau par le dispositif 58 d'introduction de gaz. Une fraction 66c de l'eau 66 noie ainsi la partie inférieure des compartiments 26 et 22. Le refroidissement du corium reçu dans les moyens 24 récupérateurs de corium est ainsi assuré dans le compartiment 22 de récupération de corium. Les moyens 44 d'échange de chaleur évacuent la puissance à l'extérieur de l'enceinte de confinement 10.

Il est à noter que l'ouverture du clapet 64 consécutive à la baisse de pression dans le compartiment 26 de logement des composants primaires permet d'équilibrer rapidement la pression entre ce compartiment et le haut du compartiment 52 de stockage d'hydrogène. Cela évite une aspiration trop rapide de l'eau du compartiment 52 de stockage d'hydrogène dans le compartiment 26 de logement des composants primaires au travers du dispositif d'introduction de gaz 58, lorsque l'installation passe de l'état illustré sur la figure 4 à l'état illustré sur la figure 5.

Bien entendu, l'invention n'est pas limitée à la forme de réalisation qui vient d'être décrite à titre d'exemple, mais en couvre toutes les variantes. Ainsi, même si l'invention a été décrite en relation avec un réacteur nucléaire à eau pressurisée, elle peut également être utilisée dans un réacteur nucléaire à eau bouillante.

## Revendications

1. Réacteur nucléaire à eau, comprenant une enceinte de confinement (10) présentant un dôme (12) et divisée en plusieurs compartiments incluant au moins une zone primaire (14,18,22,26) logeant le circuit primaire (16,28,30,32,34) du réacteur et un compartiment supérieur (46) en contact avec le dôme (12), **caractérisé par le fait que** les compartiments de l'enceinte de confinement incluent de plus :
- un compartiment (52) de stockage d'hydrogène en conditions accidentelles, communiquant avec la zone primaire (14,18,22,26), en partie basse, par un dispositif (58) d'introduction de gaz, ce compartiment (52) de stockage d'hydrogène étant normalement rempli d'eau sous l'action de moyens (68,70,72) de mise en dépression de la partie haute du compartiment de stockage d'hydrogène ;
- un compartiment (54) de traitement d'hydrogène, logeant des moyens (80) de traitement de l'hydrogène, ce compartiment (54) communiquant avec la partie haute du compartiment (52) de stockage d'hydrogène par un premier clapet anti-retour (74) apte à s'ouvrir vers le compartiment de traitement d'hydrogène, au travers de moyens (76) de limitation de débit, et communiquant directement avec le compartiment supérieur (46).

2. Réacteur selon la revendication 1, dans lequel le compartiment (52) de stockage d'hydrogène communique avec la zone primaire (14,18,22,26) en partie haute par un deuxième clapet anti-retour (64) apte à s'ouvrir vers la zone primaire.

3. Réacteur selon l'une quelconque des revendications 1 et 2, dans lequel les compartiments de l'enceinte de confinement incluent de plus un compartiment d'expansion (56) dont une partie basse communique avec la partie basse du compartiment (52) de stockage d'hydrogène au travers d'une ouverture (84) et d'un troisième clapet anti-retour (88) apte à s'ouvrir vers le compartiment d'expansion (56) et dont une partie haute communique directement avec le compartiment supérieur (46).

4. Réacteur selon la revendication 3, dans lequel des premiers moyens (92) d'échange de chaleur sont placés dans le compartiment d'expansion (56).

5. Réacteur selon l'une quelconque des revendications 3 et 4, dans lequel l'ouverture (84) et le troisième clapet anti-retour (88) sont aptes à être obturés par une première porte amovible (94), lors d'une opération de maintenance du réacteur.

6. Réacteur selon l'une quelconque des revendications précédentes, dans lequel les moyens (76) de limitation de débit limitent le débit massique du fluide admis dans le compartiment (54) de traitement de l'hydrogène à une valeur correspondant à la capacité maximale de traitement des moyens (80) de traitement de l'hydrogène.

7. Réacteur selon l'une quelconque des revendications précédentes, dans lequel le compartiment (54) de traitement d'hydrogène communique également avec le compartiment supérieur (46) par un quatrième clapet anti-retour (82) apte à s'ouvrir vers le compartiment de traitement d'hydrogène, les moyens de traitement de l'hydrogène comprenant des moyens (80) de recombinaison de l'hydrogène avec l'oxygène de l'air contenu dans le compartiment supérieur, admis dans le compartiment de traitement d'hydrogène par ce quatrième clapet anti-retour.

8. Réacteur selon l'une quelconque des revendications précédentes, dans lequel le dispositif (58) d'introduction de gaz est apte à être obturé par une deuxième porte amovible (96), lors d'une opération de maintenance du réacteur.

9. Réacteur selon l'une quelconque des revendications précédentes, dans lequel les moyens de mise en dépression de la partie haute du compartiment de stockage d'hydrogène comprennent au moins une pompe (70) normalement active, débouchant dans le compartiment supérieur (46) et reliée à la partie haute du compartiment de stockage d'hydrogène au travers d'une vanne (72) normalement ouverte.

10. Réacteur selon l'une quelconque des revendications précédentes, dans lequel la zone primaire (14,18,22,26) est normalement séparée du compartiment supérieur (46) par un bouchon étanche (50).

11. Réacteur selon l'une quelconque des revendications précédentes, dans lequel, le circuit primaire du réacteur comprenant une cuve (16) munie d'un couvercle (20) et la zone primaire incluant un puits de cuve (14) logeant la cuve (16) du réacteur, et un compartiment de maintenance (18) logeant le couvercle (20) de la cuve et situé au-dessus du puits de cuve (14) et sans communication directe avec celui-ci, des moyens sont prévus pour transférer dans le compartiment de maintenance (18) une fraction de l'eau contenue dans le compartiment (52) de stockage d'hydrogène, lors d'une opération de maintenance du réacteur.

12. Réacteur selon la revendication 11, dans lequel le circuit primaire comprenant aussi des composants primaires incluant des générateurs de vapeur (28), des pompes primaires (30), un pressuriseur (34) et des tuyauteries primaires (32), la zone primaire inclut également au moins un compartiment (26) de logement des composants primaires, avec lequel le compartiment (52) de stockage d'hydrogène communique en partie haute et en partie basse, le compartiment (26) de logement des composants primaires communiquant en partie haute avec le haut du compartiment de maintenance (18) et en partie centrale avec le haut du puits de cuve (14).

13. Réacteur selon la revendication 12, dans lequel la zone primaire inclut de plus un compartiment (22) de récupération de corium, placé sous le puits de cuve (14) sans communication directe avec celui-ci, ce compartiment (22) de récupération de corium logeant des moyens (24) récupérateurs de corium et communiquant en partie haute et en partie basse avec le bas du compartiment (26) de logement des composants primaires.

14. Réacteur selon la revendication 13, dans lequel des deuxièmes moyens (44) d'échange de chaleur sont placés dans le compartiment (22) de récupération de corium.

## Patentansprüche

1. Wasser-Kernreaktor, welcher eine, einen Dom (12) aufweisende und in mehrere, mindestens einen, den Primärkreislauf (16, 28, 30, 32, 34) des Reaktors und eine mit dem Dom (12) in Kontakt befindlichen oberen Raum (46) lagernde Primärzone(14, 18, 22, 26) aufweisende Räume unterteilte Sicherheitshülle (10) aufweist, **dadurch gekennzeichnet, daß** die Räume der Sicherheitshülle außerdem folgendes aufweisen :
- einen Raum (52) zur Lagerung des Wasserstoffs bei Unfallbedingungen, welcher mit der Primärzone (14, 18, 22, 26) im unteren Teil durch eine Gaseinführungsvorrichtung (58) kommuniziert, wobei dieser Raum (52) zur Lagerung des Wasserstoffs normalerweise unter Einwirkung von Unterdruckmitteln (68, 70, 72) des Oberteils des Wasserstofflagerraums mit Wasser gefüllt wird ;
- einen Raum (54) zur Behandlung des Wasserstoffs, in dem Mittel (80) zur Behandlung des Wasserstoffs untergebracht sind , wobei dieser Raum (54) mit dem oberen Teil des Raumes (52) zur Lagerung des Wasserstoffs über ein erstes Rückschlagventil (74), welches in der Lage ist, sich zum Raum zur Behandlung des Wasserstoffs über Durchflußbegrenzungsmittel (76) zu öffnen, und direkt mit dem oberen Raum (46) kommuniziert.

2. Reaktor nach Anspruch 1, **dadurch gekennzeichnet, daß** der Raum (52) zur
Lagerung des Wasserstoffs mit der Primärzone (14, 18, 22, 26) im oberen Teil durch ein zweites Rückschlagventil, welches in der Lage ist, sich zur Primärzone hin zu öffnen, kommuniziert.

3. Reaktor nach irgendeinem der Ansprüche 1 und 2, bei dem die Räume der Sicherheitshülle außerdem einen Expansionsraum (56) aufweisen, dessen unterer Teil mit dem unteren Teil des Raumes (52) zur Lagerung des Wasserstoffs durch eine Öffnung (84) und ein drittes Rückschlagventil (88), das in der Lage ist, sich zum Expansionsraum (56) hin zu öffnen, kommuniziert und von dem ein oberer Teil direkt mit dem oberen Raum (46) kommuniziert.

4. Reaktor nach Anspruch 3, bei dem erste Wärmeaustauschmittel (92) in dem Expansionsraum (56) untergebracht sind.

5. Reaktor nach irgendeinem der Ansprüche 3 und 4, bei dem die Öffnung (84) und das dritte Rückschlagventil (88) in der Lage sind, durch eine erste bewegliche Tür (94) anlässlich einer Wartungsaktion verschlossen zu werden.

6. Reaktor nach irgendeinem der vorangehenden Ansprüche , bei dem die Durchflußbegrenzungsmittel (76) den Fluidmassendurchfluß in den Raum zur Wasserstoffbehandlung (54) auf einen Wert begrenzen, der der maximalen Behandlungskapazität der Wasserstoffbehandlungsmittel entspricht.

7. Reaktor nach irgendeinem der vorangehenden Ansprüche , bei dem der Raum (54) zur Behandlung des Wasserstoffes ebenfalls mit dem oberen Raum (46) durch ein viertes Rückschlagventil (82), welches in der Lage ist, sich zu Raum zur Behandlung des Wasserstoffes zu öffnen, kommuniziert, wobei die Mittel zur Behandlung des Wasserstoffes im oberen Raum befindliche Mittel zur Rekombination des Wasserstoffes mit dem Sauerstoff der Luft aufweisen.

8. Reaktor nach irgendeinem der vorangehenden Ansprüche , bei dem die Gaseinführungsvorrichtung (58) in der Lage ist, bei einer Wartungsoperation des Reaktors von einer zweiten beweglichen Tür (96) verschlossen zu werden.

9. Reaktor nach irgendeinem der vorangehenden Ansprüche , bei dem die Unterdruckerzeugungsmittel des oberen Teils des Raums zur Lagerung des Wasserstoffs eine normalerweise aktive Pumpe (70) aufweisen, welche in den oberen Raum (46) mündet und mit dem oberen Teil des Raumes zur Lagerung des Wasserstoffs über ein normalerweise geöffnetes Ventil (72) verbunden ist.

10. Reaktor nach irgendeinem der vorangehenden Ansprüche , bei dem die Primärzone (14, 18, 22, 26) normalerweise vom oberen Raum (46) durch einen dichten Verschluß getrennt ist.

11. Reaktor nach irgendeinem der vorangehenden Ansprüche , bei dem Mittel vorgesehen sind, um einen Teil des im Raum (52) zur Lagerung des Wasserstoffes enthaltenen Wassers in den Wartungsraum (18) bei einem Wartungsvorgang des Reaktors zu transferieren, wobei der Primärkreislauf des Reaktors einen mit einem Deckel (20) versehenen Behälter (16) aufweist und die Primärzone einen den Behälter (16) des Reaktors lagernden Behälterschacht (14) und einen den Deckel (20) des Behälters lagernden und über dem Behälterschacht (14) liegenden und über keine Kommunikation mit diesem aufweisenden Wartungsraum (18) aufweist.

12. Reaktor nach Anspruch 11, bei dem der Primärkreislauf auch Primärkomponenten aufweist, welche Dampfgeneratoren (28), Primärpumpen (30), einen Druckerzeuger (34) und Primärverrohrungen (32) enthalten, die Primärzone ebenfalls mindestens einen Raum (26) zur Lagerung der Primärkomponenten einschließt, mit dem der Raum (52) zur Lagerung des Wasserstoffs im oberen und unteren Teil kommuniziert, und wobei der Raum (26) zur Lagerung der Primärkomponenten im oberen Teil mit dem oberen Teil des Wartungsraums (18) und im Zentralteil mit dem oberen Teil des Behälterschachts (14) kommuniziert.

13. Reaktor nach Anspruch 12, bei dem die Primärzone außerdem einen , unter dem Behälterschacht (14), und ohne direkte Kommunikation mit diesem, angeordneten Raum (22) zum Auffangen des Coriums enthält, wobei dieser Raum (22) zum Auffangen des Coriums Mittel (24) zum Auffangen des Coriums lagert und im unteren und oberen Teil mit dem unteren Teil des Raumes (26) zur Lagerung der Primärkomponenten kommuniziert.

14. Reaktor nach Anspruch 13, bei dem zweite Wärmeaustauschmittel (44) im Raum (22) zum Auffangen des Coriums angeordnet sind.

## Claims

1. Water nuclear reactor, comprising a confinement enclosure (10) having a dome (12) and subdivided into several compartments including at least one primary zone (14, 18, 22, 26) housing the primary circuit (16, 28, 30, 32, 34) of the reactor and an upper compartment (46) in contact with the dome (12), **characterized in that** the compartments of the confinement enclosure also include:
- a compartment (520 for storing hydrogen under accident conditions, communicating in its lower part with the primary zone (14, 18, 22, 26) by a gas introduction device (58), said hydrogen storage compartment (52) being normally filled with water under the action of means (68, 70, 72) for depressurizing the upper part of the hydrogen storage compartment,
- a hydrogen treatment compartment (54), housing hydrogen treatment means (80), said compartment (54) communicating with the upper part of the hydrogen storage compartment (52) by a first check valve (74) able to open towards the hydrogen treatment compartment, through flow limiting means (76), and directly communicating with the upper compartment (46).

2. Reactor according to claim 1, wherein the hydrogen storage compartment (52) communicates with the primary zone (14, 18, 22, 26), in the upper part, by a second check valve (64) able to open to the primary zone.

3. Reactor according to either of the claims 1 and 2, wherein the compartments of the confinement enclosure also include an expansion compartment (56), whereof a lower part communicates with the lower part of the hydrogen storage compartment (52) through an opening (84) and a third check valve (88) able to open towards the expansion compartment (56) and whereof an upper part communicates directly with the upper compartment (46).

4. Reactor according to claim 3, wherein first heat (92) exchange means are placed in the expansion compartment (56).

5. Reactor according to either of the claims 3 and 4, wherein the opening (84) and the third check valve (88) can be sealed by a first removable door (94), during a reactor maintenance operation.

6. Reactor according to any one of the preceding claims, wherein the flow rate limiting means (76) limit the mass flow of fluid admitted into the hydrogen treatment compartment (54) to a value corresponding to the maximum treatment capacity of the hydrogen treatment means (80).

7. Reactor according to any one of the preceding claims, wherein the hydrogen treatment compartment (540 also communicates with the upper compartment (46) by a fourth check valve (82) able to open towards the hydrogen treatment compartment, the hydrogen treatment means incorporating means (80) for recombining hydrogen with atmospheric oxygen contained in the upper compartment and admitted into the hydrogen treatment compartment by said fourth check valve.

8. Reactor according to any one of the preceding claims, wherein the gas introduction device (58) can be sealed by a second removable door (96, during a reactor maintenance operation.

9. Reactor according to any one of the preceding claims, wherein means for depressurizing the upper part of the hydrogen storage compartment comprise at least one, normally active pump (70), which issues into the upper compartment (46) and is connected to the upper part of the hydrogen storage compartment through a normally open valve (72).

10. Reactor according to any one of the preceding claims, wherein the primary zone (14, 18, 22, 26) is normally separated from the upper compartment (46) by a tight plug (50).

11. Reactor according to any one of the preceding claims, wherein the reactor primary circuit comprises a vessel (16) provided with a cover (20) and the primary zone including a vessel well (14) housing the reactor vessel (16), and a maintenance compartment (18) which houses the vessel cover (20) and which is positioned above the vessel well (14) and has no direct communication therewith, means being provided for transferring into the maintenance compartment (18) a fraction of the water contained in the hydrogen storage compartment (52), during a reactor maintenance operation.

12. Reactor according to claim 11, wherein the primary circuit also comprises primary components including steam generators (28), primary pumps (30), a pressurizer (34) and primary pipes (32), the primary zone also including at least one primary component housing compartment (26), with which the hydrogen storage compartment (52) communicates in both the upper and lower parts, the primary component housing compartment (26) communicating in the upper part with the tog of the maintenance compartment (18) and in the central pact with the top of the vessel well (14).

13. Reactor according to claim 12, wherein the primary zone also includes a corium recovery compartment (22), placed beneath the vessel well (14) and having no direct communication therewith, said corium recovery compartment (22) housing corium recovery means (24) and communicating in the upper and lower parts with the bottom of the primary component housing compartment (26).

14. Reactor according to claim 13, wherein second heat exchange means (44) are placed in the corium recovery compartment (22).
